# FASCICULE DE BREVET EUROPEEN

(11) **EP 2 198 143 B1**
(45) Date de publication et mention de la délivrance du brevet: **11.05.2011**
(21) Numéro de dépôt: 08871116.3
(22) Date de dépôt: 12.09.2008
(51) Int. Cl.: F02K 1/72, F02K 1/76, B64D 29/00

(54) **ACTIONNEUR POUR STRUCTURE MOBILE DE NACELLE D'AERONEF, ET NACELLE COMPRENANT AU MOINS UN TEL ACTIONNEUR**
AKTUATOR FÜR EINE MOBILE STRUKTUR EINER FLUGZEUGGONDEL UND GONDEL MIT MINDESTENS EINEM SOLCHEN AKTUATOR
ACTUATOR FOR AN AIRCRAFT NACELLE MOBILE STRUCTURE, AND NACELLE COMPRISING AT LEAST ONE SUCH ACTUATOR

(30) Priorité: 08.10.2007 FR 0707048
(43) Date de publication de la demande: 23.06.2010
(73) Titulaire: Aircelle, 76700 Gonfreville l'Orcher (FR)
(72) Inventeur: VAUCHEL, Guy, F-76600 Le Havre (FR); BAUDU, Pierre, F-76280 Criquetot l'Esneval (FR); JORET, Jean-Philippe, F-27210 Beuzeville (FR); GUENADOU, Christophe, F-76600 Le Havre (FR)
(74) Mandataire: Gaillarde, Frédéric F. Ch.
(86) Numéro de dépôt international: PCT/FR2008/001279
(87) Numéro de publication internationale: WO 2009/090319

(56) Documents cités:
- EP-A- 0 267 078
- EP-A- 0 853 192
- EP-A- 0 884 470
- EP-A- 1 239 139
- GB-A- 1 386 232
- US-B1- 6 170 254

## Description

La présente invention se rapporte à un actionneur pour structure mobile de nacelle d'aéronef, et à une nacelle comprenant au moins un tel actionneur.

On connaît du brevet européen EP 1 239 139 appartenant à la demanderesse un actionneur pour structure mobile de nacelle de moteur d'aéronef, comprenant un moteur destiné à être monté sur une partie fixe de ladite nacelle, une vis sans fin apte à être entraînée en rotation par ce moteur, un coulisseau destiné à être relié à ladite structure mobile et comportant un écrou en prise avec ladite vis sans fin, et une rotule autorisant un écart angulaire entre l'axe de ladite vis sans fin et la direction de déplacement dudit coulisseau.

Dans cet actionneur de la technique antérieure, la rotule permet d'éviter de soumettre l'arbre du moteur et la vis sans fin à de trop fortes contraintes en cas de désalignement du coulisseau par rapport au moteur.

La présente invention a pour but principal d'améliorer le comportement de cet actionneur vis-à-vis d'un tel désalignement.

La présente invention a également pour but de fournir une solution simple pour mettre en place l'écrou dans le coulisseau, ainsi que de faciliter les opérations de montage et de démontage de la structure mobile par rapport à la partie fixe de la nacelle.

On atteint le but principal de l'invention avec un actionneur pour structure mobile de nacelle de moteur d'aéronef, comprenant un moteur destiné à être monté sur une partie fixe de ladite nacelle, une vis sans fin apte à être entraînée en rotation par ce moteur, un coulisseau destiné à être relié à ladite structure mobile et comportant un écrou en prise avec ladite vis sans fin, et une première rotule autorisant un écart angulaire entre l'axe de ladite vis sans fin et ledit coulisseau, remarquable en ce qu'il comprend un fourreau apte à recevoir ladite vis et s'étendant avec un jeu à l'intérieur dudit coulisseau, ledit écrou étant monté sur l'extrémité dudit fourreau la plus proche dudit moteur, et ladite première rotule étant interposée entre l'autre extrémité dudit fourreau et ledit coulisseau.

Le fait de prévoir que la première rotule est distincte de l'écrou, et située à l'extrémité du fourreau la plus éloignée du moteur, permet de s'assurer que cette rotule sera toujours située à une distance du moteur au moins égale à la longueur de la vis sans fin.

Grâce à cela, on peut minimiser l'angle entre l'axe de la vis sans fin et la direction de déplacement du coulisseau en cas de désalignement de ce coulisseau par rapport au moteur, et donc de réduire les contraintes imposées à la vis sans fin, au moteur et à la structure mobile elle-même.

On notera de plus que le fait de monter l'écrou sur un fourreau lui-même monté à l'intérieur du coulisseau, constitue une solution aisée de montage de l'écrou sur le coulisseau, cet écrou pouvant être de conception standard ou assisté (par exemple à billes).

Suivant d'autres caractéristiques optionnelles de l'actionneur selon l'invention :
- ladite première rotule est interposée entre ladite autre extrémité de fourreau et un pied monté lui-même à l'intérieur dudit coulisseau : ce pied constitue un organe intermédiaire facilitant le montage du fourreau à l'intérieur du coulisseau ;
- ledit pied est relié audit fourreau par au moins une clavette amovible : la présence d'une telle clavette facilite les opérations de montage/démontage du pied dans le coulisseau ;
- ladite première rotule est reliée audit pied par une goupille amovible : la présence d'une telle goupille facilite les opérations de montage/démontage de la première rotule sur le pied ;
- cet actionneur comprend une deuxième rotule interposée entre ledit moteur et ladite vis sans fin : la présence de cette deuxième rotule contribue à assouplir la liaison entre le moteur et le coulisseau, et donc à soulager notamment la vis sans fin et ce moteur des efforts susceptibles d'être engendrés par un désalignement du coulisseau par rapport au moteur ;
- ladite deuxième rotule est reliée audit moteur par un organe de liaison amovible tel qu'une goupille : la présence d'un tel organe de liaison facilite les opérations de montage/démontage de la deuxième goupille sur le moteur.

La présente invention se rapporte également à une nacelle pour moteur d'aéronef, comprenant une partie fixe et au moins une structure montée mobile sur cette partie fixe, remarquable en ce qu'elle comprend au moins un actionneur conforme à ce qui précède interposé entre ladite partie fixe et ladite structure mobile.

Suivant d'autres caractéristiques optionnelles de cette nacelle :
- ladite structure mobile est un capot mobile d'inverseur de poussée à grilles,
- ladite structure mobile est une porte d'inverseur de poussée à portes.

D'autres caractéristiques et avantages de la présente invention apparaîtront à la lecture de la description qui va suivre et à l'examen des figures ci-annexées, dans lesquelles :
- la figure 1 est une vue en coupe axiale d'un actionneur selon l'invention,
- les figures 2 à 4 représentent des étapes intermédiaires de montage de l'actionneur de la figure 1,
- les figures 5 et 6 représentent les étapes de montage d'un capot coulissant d'inverseur de poussée à grilles sur le cadre avant de cet inverseur, au moins un actionneur selon l'invention étant interposé entre ce capot et ce cadre, et
- les figures 7 et 8 représentent deux étapes de démontage d'un actionneur selon l'invention.

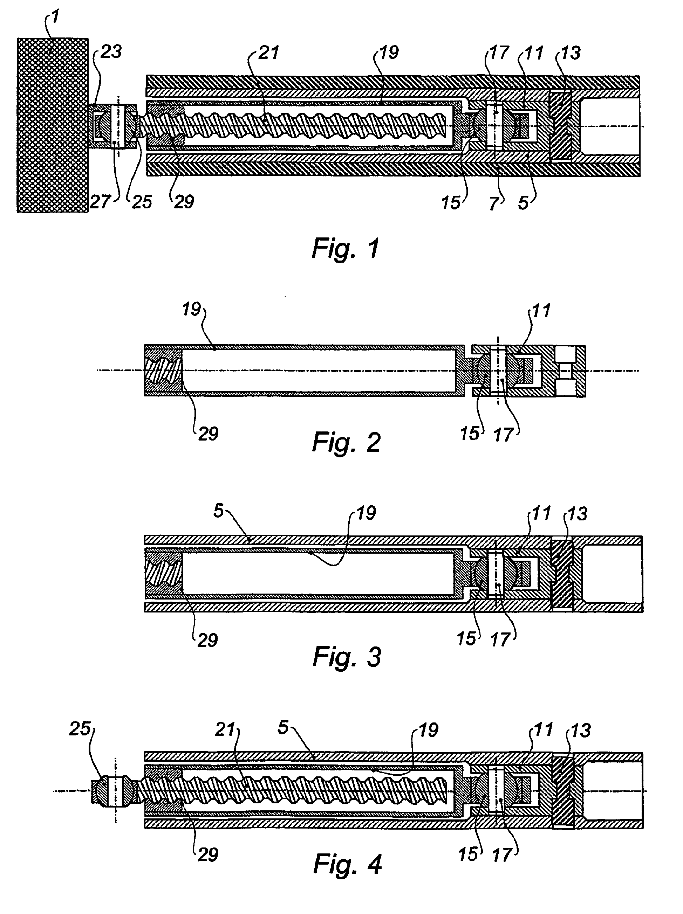

En se reportant à la figure 1, on peut voir que l'actionneur selon l'invention comprend un moteur électrique 1 destiné à être monté sur une partie fixe de nacelle de moteur d'aéronef, telle qu'un cadre avant d'inverseur de poussée à grilles (connu en soi).

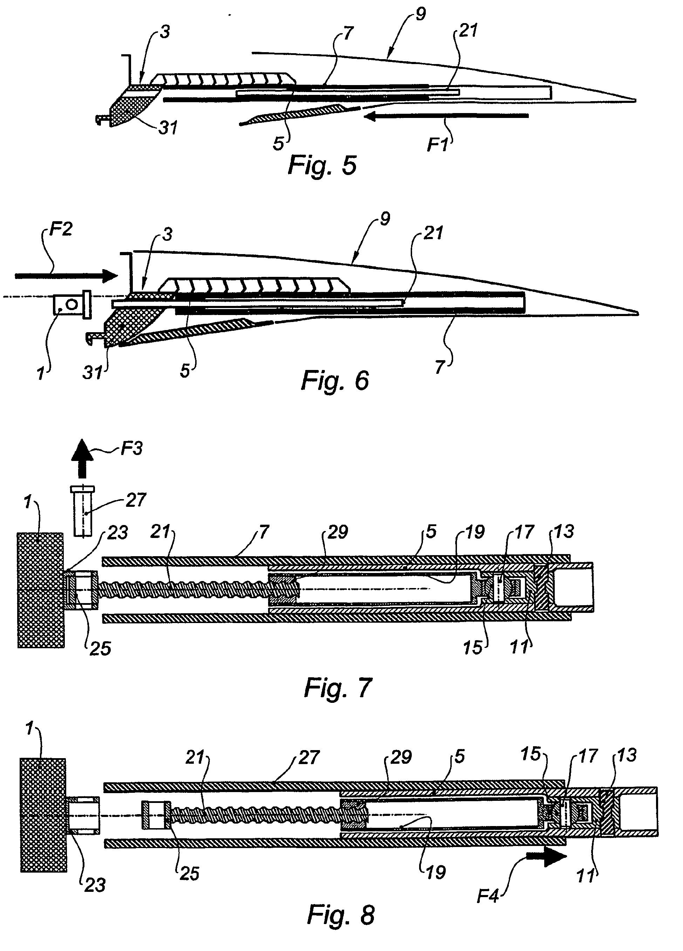

Un tel cadre avant est représenté sous la référence 3 sur les figures 5 et 6.

L'actionneur selon l'invention comprend par ailleurs un coulisseau 5 monté coulissant à l'intérieur d'un rail 7 solidaire d'une structure montée mobile par rapport à la structure fixe de la nacelle.

Une telle structure mobile peut être par exemple un capot coulissant 9 d'inverseur de poussée à grilles, tel que représenté sur les figures 5 et 6.

A l'intérieur du coulisseau 5 est montée une pièce formant pied 11, une clavette 13 traversant à la fois le coulisseau 5 et le pied 11 permettant de fixer entre elles ces pièces.

A l'intérieur du pied 11 est montée une première rotule 15 traversée par une goupille 17.

Sur cette rotule 15 est monté, à trois degrés de liberté et avec un jeu par rapport à l'intérieur du coulisseau 5, un fourreau 19 recevant une vis sans fin 21, elle-méme reliée à l'axe 23 du moteur 1 par une deuxième rotule 25 solidarisée sur cet axe 23 au moyen d'une goupille 27.

A l'extrémité du fourreau 19 la plus proche du moteur 1 se trouve un écrou 29 fixé sur ce fourreau, et coopérant avec le pas de vis de la vis sans fin 21.

Le mode de fonctionnement et les avantages de l'actionneur qui viennent d'être décrits sont les suivants :

Sous l'effet de la rotation du moteur électrique 1, la vis sans fin 21 tourne, grâce à quoi l'écrou 29 et donc le fourreau 19 ainsi que le coulisseau 5, se translatent à l'intérieur du rail 7.

Le fait que la première rotule 15 soit séparée du moteur 1 par une longueur au moins égale à celle de la vis sans fin 21, permet de minimiser l'angle entre l'axe de la vis sans fin 21 et la direction du déplacement du coulisseau 5 en cas de désalignement de ce coulisseau par rapport au moteur.

La présence de deux rotules 15 et 25 dans la liaison cinématique du moteur 1 avec le coulisseau 5 permet d'accroître la souplesse de cette liaison vis-à-vis d'éventuels désalignements du coulisseau par rapport au moteur.

On notera que le fait de monter l'écrou 29 sur un fourreau 19 qui lui-même est claveté par l'intermédiaire du pied 11 à l'intérieur du coulisseau 5, offre une solution élégante de montage de cet écrou sur ce coulisseau.

Le mode d'assemblage de l'actionneur selon l'invention peut être compris sur les figures 2 à 4.

Comme cela est visible sur la figure 2, on commence par monter le fourreau 19 équipé de son écrou 29 sur le pied 11 au moyen de la première rotule 15 (figure 2).

Puis on vient placer l'ensemble ainsi obtenu à l'intérieur du coulisseau 5, et l'on introduit la clavette 13 dans le coulisseau 5 et le pied 11 de manière à immobiliser ces deux pièces l'une par rapport à l'autre (figure 3).

On vient ensuite placer la vis sans fin 21 équipée de sa rotule 25 à l'intérieur de l'écrou 29 (figure 4).

Enfin, on fixe l'ensemble ainsi obtenu sur l'arbre 23 du moteur électrique 1, grâce à la goupille 27 qui traverse la rotule 25 (voir figure 1).

Comme on peut le comprendre à la lumière de ce qui précède, les différentes parties formant l'actionneur selon l'invention peuvent être assemblées de manière très simple les unes aux autres, grâce à une clavette et à des goupilles.

On peut voir sur les figures 5 et 6 la manière dont un actionneur tel que décrit précédemment peut être installé sur un inverseur de poussée à grilles, cet inverseur de poussée comportant, comme cela a été dit plus haut, d'une part une partie fixe 3 comprenant un cadre avant, et d'autre part au moins une partie mobile 9 comprenant un capot coulissant.

Dans cet exemple, les rails de guidage 7 sont solidaires du cadre avant 3.

Après avoir monté sur le capot 9 le coulisseau 5 équipé de son fourreau 19 (non visible) et de sa vis sans fin 21, on vient positionner le capot coulissant 9 sur le cadre avant 3 de manière que le coulisseau 5 s'engage à l'intérieur du rail de guidage 7.

On fait alors coulisser le capot coulissant 9 vers l'avant, c'est-à-dire dans le sens de la flèche F1 visible sur la figure 5.

On prolonge ce coulissement jusqu'à ce que l'extrémité de la vis sans fin 21 traverse une partie 31 du cadre avant 3.

On vient ensuite fixer sur cette extrémité de la vis 21 le moteur électrique 1, comme cela est indiqué par la flèche F2 de la figure 6.

Il est intéressant de noter qu'avec l'actionneur selon l'invention, il n'est pas nécessaire de prévoir un réglage particulier entre le moteur électrique 1 et l'écrou d'entraînement 29 ; en effet, par sa nature même, la vis sans fin 21 n'a aucune position angulaire prédéterminée, et se positionne donc automatiquement en accord avec le positionnement angulaire de l'écrou.

En cas de grippage de la vis sans fin 21 à l'intérieur de l'écrou 29, susceptible d'entraîner le blocage du capot 9 par rapport au cadre avant 3, il suffit de retirer la goupille 27 de liaison de la vis sans fin 21 par rapport au moteur électrique 1, comme cela est visible sur la figure 7 et indiqué par la flèche F3, grâce à quoi on peut alors aisément faire coulisser le capot 9 en aval, c'est-à-dire dans le sens de la flèche F4 indiqué sur la figure 8, permettant ainsi de dégager le coulisseau 5 du rail de guidage 7, et ainsi d'intervenir sur, et/ou de changer le fourreau 1, et/ou la vis sans fin et/ou l'écrou 29, par exemple.

On comprend donc que l'actionneur selon l'invention est d'une maintenance particulièrement aisée.

Bien entendu, la présente invention n'est nullement limitée au mode de réalisation décrit et représenté, fourni à titre de simple exemple.

C'est ainsi qu'il faut comprendre que le terme « rotule » utilisé dans le présent brevet couvre tout système de liaison équivalent à une rotule mécanique, c'est-à-dire tout système de liaison autorisant deux degrés de liberté en rotation.

De tels systèmes de liaison peuvent comprendre notamment des systèmes à cardan, ou bien encore des organes de liaison élastiques, du type « Paulstra » par exemple.

## Revendications

1. Actionneur pour structure mobile (9) de nacelle de moteur d'aéronef, comprenant un moteur (1) destiné à être monté sur une partie fixe (3) de ladite nacelle, une vis sans fin (21) apte à être entraînée en rotation par ce moteur (1), un coulisseau (5) destiné à être relié à ladite structure mobile (9) et comportant un écrou (29) en prise avec ladite vis sans fin, et une première rotule (15) autorisant un écart angulaire entre l'axe de ladite vis sans fin (21) et ledit coulisseau (5), **caractérisé en ce qu'**il comprend un fourreau (19) apte à recevoir ladite vis (21) et s'étendant avec un jeu à l'intérieur dudit coulisseau (5), ledit écrou (29) étant monté sur l'extrémité dudit fourreau (19) la plus proche dudit moteur (1), et ladite première rotule étant interposée entre l'autre extrémité dudit fourreau (19) et ledit coulisseau (5).

2. Actionneur selon la revendication 1, **caractérisé en ce que** ladite première rotule (15) est interposée entre ladite autre extrémité de fourreau et un pied (11) monté lui-même à l'intérieur dudit coulisseau (5).

3. Actionneur selon la revendication 2, **caractérisé en ce que** ledit pied (11) est relié audit fourreau (19) par au moins une clavette amovible (13).

4. Actionneur selon l'une des revendications 2 ou 3, **caractérisé en ce que** ladite première rotule (15) est reliée audit pied (11) par une goupille amovible (17).

5. Actionneur selon l'une quelconque des revendications précédentes, **caractérisé en ce qu'**il comprend une deuxième rotule (25) interposée entre ledit moteur (1) et ladite vis sans fin (21).

6. Actionneur selon la revendication 5, **caractérisé en ce que** ladite deuxième rotule (25) est reliée audit moteur (1) par un organe de liaison amovible tel qu'une goupille (27).

7. Nacelle pour moteur d'aéronef, comprenant une partie fixe (3) et au moins une structure (9) montée mobile sur cette partie fixe (3), **caractérisée en ce qu'**elle comprend au moins un actionneur conforme à l'une quelconque des revendications précédentes interposé entre ladite partie fixe (3) et ladite structure mobile (9).

8. Nacelle selon la revendication 7, **caractérisée en ce que** ladite structure mobile est un capot mobile (9) d'inverseur de poussée à grilles.

9. Nacelle selon la revendication 7, **caractérisée en ce que** ladite structure mobile est une porte d'inverseur de poussée à portes.

## Claims

1. An actuator for an aircraft engine nacelle mobile structure (9), comprising a motor (1) intended to be mounted on a fixed part (3) of said nacelle, an endless screw (21) able to be turned by this motor (1), a slide (5) intended to be connected to said mobile structure (9) and comprising a nut (29) in mesh with said endless screw, and a first ball joint (15) allowing some angular offset between the axis of said endless screw (21) and said slide (5), **characterized in that** it comprises a sleeve (19) able to accept said screw (21) and extending with clearance inside said slide (5), said nut (29) being mounted on the end of said sleeve (19) closest to said motor (1), and said first ball joint being interposed between the other end of said sleeve (19) and said slide (5).

2. The actuator as claimed in claim 1, **characterized in that** said first ball joint (15) is interposed between said other end of the sleeve and a foot end (11) itself mounted inside said slide (5).

3. The actuator as claimed in claim 2, **characterized in that** said foot end (11) is connected to said sleeve (19) by at least one removable key (13).

4. The actuator as claimed in one of claims 2 and 3, **characterized in that** said first ball joint (15) is connected to said foot end (11) by a removable pin (17).

5. The actuator as claimed in any one of the preceding claims, **characterized in that** it comprises a second ball joint (25) interposed between said motor (1) and said endless screw (21).

6. The actuator as claimed in claim 5, **characterized in that** said second ball joint (25) is connected to said motor (1) by a removable connecting member such as a pin (27).

7. An aircraft engine nacelle comprising a fixed part (3) and at least one structure (9) mounted such that it can move on this fixed part (3), **characterized in that** it comprises at least one actuator as claimed in any one of the preceding claims, interposed between said fixed part (3) and said mobile structure (9).

8. The nacelle as claimed in claim 7, **characterized in that** said mobile structure is a mobile cowl (9) of a cascade-type thrust reverser.

9. The nacelle as claimed in claim 7, **characterized in that** said mobile structure is a door of a door-type thrust reverser.

## Patentansprüche

1. Aktuator für bewegbare Struktur (9) eines Luftfahrzeugmotorrumpfs, der einen Motor (1), der dazu bestimmt ist, auf einem starren Abschnitt (3) des Rumpfes befestigt zu sein, eine Schnecke (21), die imstande ist, von diesem Motor (1) rotierend angetrieben zu werden, eine Gleitführung (5), die dazu bestimmt ist, mit der bewegbaren Struktur (9) verbunden zu sein, umfasst, und eine Mutter (29) in Ineingriffnahme mit der Schnecke, und ein erstes Kugelgelenk (15) aufweist zwecks Genehmigung eines Winkelabstand zwischen der Achse der Schnecke (21) und der Gleitführung (5), **dadurch gekennzeichnet, dass** er eine Gleithülse (19) umfasst, die imstande ist, die Schecke (21) aufzunehmen und die sich mit einem Spiel innerhalb der Gleitführung (5) erstreckt, wobei die Mutter (29) an dem am nächsten zum Motor (1) liegenden Ende der Gleithülse (19) montiert ist, und das erste Kugelgelenk zwischen dem anderen Ende der Gleithülse (19) und der Gleitführung (5) zwischengestellt ist.

2. Aktuator nach Anspruch 1, **dadurch gekennzeichnet, dass** das erste Kugelgelenk (15) zwischen dem anderen Ende der Gleithülse und einem Fuß (11) zwischengestellt ist, der selbst innerhalb der Gleitführung (5) montiert ist.

3. Aktuator nach Anspruch 2, **dadurch gekennzeichnet, dass** der Fuß (11) mit der Gleithülse (19) durch mindestens einen entfernbaren Keil (13) verbunden ist.

4. Aktuator nach einem der Ansprüche 2 oder 3, **dadurch gekennzeichnet, dass** das erste Kugelgelenk (15) mit dem Fuß (11) durch einen entfernbaren Zapfen (17) verbunden ist.

5. Aktuator nach einem der vorangehenden Ansprüche, **dadurch gekennzeichnet, dass** er ein zweites Kugelgelenk (25) umfasst, das zwischen dem Motor (1) und der Schnecke (21) zwischengestellt ist.

6. Aktuator nach Anspruch 5, **dadurch gekennzeichnet, dass** das zweite Kugelgelenk (25) mit dem Motor (1) durch ein entfernbares Verbindungsorgan wie ein Zapfen (27) verbunden ist.

7. Rumpf für Luftfahrzeugmotor, der einen starren Abschnitt (3) und mindestens eine auf diesem starren Abschnitt (3) bewegbar montierte Struktur (9) umfasst, **dadurch gekennzeichnet, dass** er mindestens einen Aktuator nach einem der vorangehenden Ansprüche umfasst, der zwischen dem starren Abschnitt (3) und der bewegbaren Struktur (9) zwischengestellt ist.

8. Rumpf nach Anspruch 7, **dadurch gekennzeichnet, dass** die bewegbare Struktur eine bewegbare Abdeckung (9) einer Schubumkehr mit Gitter ist.

9. Rumpf nach Anspruch 7, **dadurch gekennzeichnet, dass** die bewegbare Struktur eine Tür einer Schubumkehr mit Türen ist.
